# EUROPÄISCHE PATENTSCHRIFT

(11) **EP 3 192 598 B1**
(45) Veröffentlichungstag und Bekanntmachung des Hinweises auf die Patenterteilung: **27.03.2019**
(21) Anmeldenummer: 16202795.7
(22) Anmeldetag: 08.12.2016
(51) Int. Cl.: B22F 3/105, B22F 5/04, B33Y 10/00, B33Y 30/00, B33Y 50/02, B33Y 80/00, C04B 35/111, G01N 21/31, G01N 21/47, G01N 21/71

(54) **VERFAHREN UND VORRICHTUNG ZUM ERMITTELN EINER KONZENTRATION WENIGSTENS EINES WERKSTOFFS IN EINEM GESINTERTEN ODER GESCHMOLZENEN PULVERGEMISCH FÜR EIN ADDITIVES HERSTELLVERFAHREN**
METHOD AND APPARATUS FOR DETERMINING A CONCENTRATION OF AT LEAST ONE MATERIAL IN A SINTERED OR MOLTEN POWDER MIXTURE FOR AN ADDITIVE PRODUCTION METHOD
PROCÉDÉ ET DISPOSITIF DE DÉTERMINATION D'UNE CONCENTRATION D'AU MOINS UN MATÉRIAU DANS UNE POUDRE FRITTÉE OU FONDUE POUR UN PROCÉDÉ DE FABRICATION ADDITIF

(30) Priorität: 14.01.2016 DE 102016200324
(43) Veröffentlichungstag der Anmeldung: 19.07.2017
(73) Patentinhaber: MTU Aero Engines AG, 80995 München (DE)
(72) Erfinder: Ladewig, Alexander, 83707 Bad Wiessee (DE); Jakimov, Andreas, 85777 Fahrenzhausen (DE); Friedberger, Katrin, 85235 Odelzhausen (DE)

(56) Entgegenhaltungen:
- EP-A2- 2 832 475
- WO-A1-2017/036868
- WO-A2-2015/040433
- US-A1- 2007 205 184
- US-A1- 2009 206 065
- US-A1- 2011 061 591

## Beschreibung

Die Erfindung betrifft ein Verfahren zum Ermitteln einer Konzentration wenigstens eines Werkstoffs in einem Pulver, welches als Ausgangsstoff für die Herstellung eines Bauteils, insbesondere eines Bauteils einer Strömungsmaschine, in einem additiven Herstellverfahren dient. Außerdem betrifft die Erfindung eine Fertigungsvorrichtung zur additiven Herstellung eines Bauteils gemäß dem Oberbegriff von Patentanspruch 10 sowie ein Bauteil für eine Strömungsmaschine.
Aus der US 2015/0061170 A1 ist ein additives Herstellverfahren für ein Bauteil bekannt, bei welchem eine Dichte und eine Temperatur einer Materialschicht erfasst werden. In Abhängigkeit von dieser erfassten Dichte und/oder dieser erfassten Temperatur wird die Fertigung des Bauteils bei der additiven Herstellung gesteuert.
Aus der WO 2014/074947 A9 ist ein additives Herstellverfahren von Triebwerksbauteilen bekannt. Die dabei verwendete Fertigungsvorrichtung kann in Abhängigkeit von mittels einer Wärmebildkamera erfassten Werten gesteuert werden.
Aus der US 2015/0273622 A1 ist ebenfalls ein additives Herstellverfahren für ein Bauteil bekannt. Dabei wird als Ausgangsstoff ein Pulvergemisch aus wenigstens zwei Werkstoffen eingesetzt. Dieser Ausgangsstoff wird mittels eines Hochenergiestrahls zur Herstellung des Bauteils aufgeschmolzen, wobei die Leistung des Hochenergiestrahls in Abhängigkeit von dem eingesetzten Pulvergemisch eingestellt wird. Entsprechende Werte zur Einstellung der Leistung des Hochenergiestrahls sind dabei in einer Datenbank für jeweilige Pulvergemische hinterlegt.
Die US 2009/0206065 A1 beschreibt ein Verfahren und eine Vorrichtung zum Überwachen und Steuern eines selektiven Laser-Pulver-Verfahrens. Die Vorrichtung weist eine Rückkopplungsregelung auf, um die Stabilität des selektiven Laser-Pulver-Verfahrens zu verbessern. Ein Signal,
das einen geometrischen Wert einer Schmelzzone widerspiegelt, wird in der Rückkopplungsrege-lung verwendet, um Scan-Parameter des Laserstrahls einzustellen (z.B. Laserleistung, Größe des Laserspots, Scan-Geschwindigkeit, ...), um den geometrischen Wert der Schmelzzone auf einem konstanten Niveau zu halten. Hierdurch können Variationen von Grenzbedingungen (z.B. örtliche Wärmeleitfähigkeit) kompensiert werden.

Und gemäß der US 2007/0205184 A1 werden ein Verfahrensschritt mit direkter Metallabscheidung (DMD-Verfahrensschritt) und ein trockener Mikro-Funkenerosions-Verfahrensschritt mit 5 Freiheitsgraden (mEDM-Verfahrensschritt) miteinander kombiniert, um eine Submikron-Auflösung bereitzustellen, die für die ultrapräzise Herstellung von Werkstücken erforderlich ist. Der DMD-Verfahrensschritt umfasst eine optische Rückkopplung für die Dimensionskontrolle unter Verwendung eines fasergekoppelten Hochenergie-Diodenlasers mit kurzer Ansprechzeit und kleinem Strahlparameter. Und der mEDM-Verfahrensschritt ist ein trockener EDM-Verfahrensschritt unter Verwendung eines inerten Gases mit geeigneten dielektrischen Eigenschaften, um die Oberflächenbehandlungs-Vorgänge durchzuführen.

Aufgabe der vorliegenden Erfindung ist es, Bauteile in einem additiven Herstellverfahren mit einer besonders hohen Qualität herstellen zu können. Zudem ist es Aufgabe der vorliegenden Er-findung, eine Fertigungsvorrichtung zu schaffen, mittels welcher Bauteile in einem additiven Herstellverfahren mit einer besonders hohen Qualität hergestellt werden können.

Diese Aufgaben werden erfindungsgemäß mit einem Verfahren zum Ermitteln einer Konzentration wenigstens eines Werkstoffes in einem Pulver als Ausgangsstoff für die Herstellung eines Bauteils gemäß dem Patentanspruch 1, sowie einer Fertigungsvorrichtung zur additiven Herstellung eines Bauteils gemäß dem Patentanspruch 10 gelöst. Vorteilhafte Ausgestaltungen mit zweckmäßigen Weiterbildungen der Erfindung sind in den jeweiligen Unteransprüchen angegeben, wobei vorteilhafte Ausgestaltungen des Verfahrens als vorteilhafte Ausgestaltungen der Fertigungsvorrichtung und umgekehrt anzusehen sind.

Ein erster Aspekt der Erfindung betrifft ein Verfahren zum Ermitteln einer Konzentration wenigstens eines Werkstoffs in einem Pulvergemisch, welches als Ausgangsstoff für die Herstellung eines Bauteils in einem additiven Herstellverfahren dient. Insbesondere dient das Pulver dabei als Ausgangsstoff für die Herstellung eines Bauteils einer Strömungsmaschine, wobei bei Bauteilen von Strömungsmaschinen besonders hohe Qualitätsanforderungen bestehen.

Erfindungsgemäß ist es vorgesehen, dass ein Pulvergemisch mit wenigstens zwei unterschiedlichen Werkstoffen das a) wenigstens ein Metallpulver und/oder Metalllegierungspulver sowie b) wenigstens einen keramischen, pulverförmigen Werkstoff aufweist, als Ausgangsstoff für das additive Herstellen des Bauteils bereitgestellt wird. Ein mittels einer Strahlungsquelle erzeugter Hochenergiestrahl wird zum Sintern oder Schmelzen des Pulvergemisches über eine Oberfläche dieses Pulvergemisches geführt. Der Hochenergiestrahl kann beispielsweise ein Laserstrahl, welcher auch kurz als Laser bezeichnet werden kann, oder ein Elektronenstrahl sein. Während der Anstrahlung mit dem Hochenergiestrahl wird mittels einer Erfassungseinrichtung mindestens ein Helligkeitswert im sichtbaren und/oder infraroten Spektralbereich wenigstens eines mittels des Hochenergiestrahls angestrahlten Teilbereichs der Oberfläche des gesinterten oder geschmolzenen Pulvergemisches erfasst. Diese Erfassungseinrichtung kann beispielsweise als Kamera und/oder als sogenannter optischer Tomograf ausgebildet sein. Dabei wird insbesondere nur der jeweilige angestrahlte Teilbereich erfasst. Es ist aber auch möglich, dass auch Helligkeitswerte von Teilbereichen der Oberfläche erfasst werden, die an diesen Teil-bereich angrenzen. So kann beispielsweise die Helligkeit eines Schmelzbereichs des Pulvergemisches und der diesen Schmelzbereich umgebenden Oberfläche des Pulvers erfasst werden.

In Abhängigkeit von dem erfassten mindestens einen Helligkeitswert beziehungsweise jeweiligen erfassten Helligkeitswerten und von mindestens einem vorbestimmten Referenzhelligkeitswert für eine Konzentration und/oder einen Konzentrationsbereich des Werkstoffs wird mittels einer Auswerteeinrichtung die Konzentration wenigstens eines Werkstoffs in dem Pulvergemisch ermittelt. Dadurch ist es möglich, die Zusammensetzung des Pulvergemisches während der additiven Herstellung, d.h. online, zu erfassen und zu bestimmen. In Abhängigkeit der ermittelten Konzentrationswerte kann beispielsweise die Fertigung des Bauteils, insbesondere die Zusammensetzung des verwendeten Pulvergemisches, geregelt werden. Des Weiteren kann vorteilhafterweise auch berücksichtigt werden, dass unterschiedliche Konzentrationen der Werkstoffe zu unterschiedlichen Schrumpfungen bei dem herzustellenden Bauteil führen können. Durch die Ermittlung der Konzentration der Werkstoffe im Pulvergemisch, kann auch dieser Faktor bei der Fertigung berücksichtigt und gegebenenfalls korrigiert werden. Dadurch ist es insgesamt möglich, ein Bauteil mit besonders hoher Qualität hinsichtlich Stoffzusammensetzung und Geometrie herzustellen.

Bei der Ermittlung der Konzentration des wenigstens einen Werkstoffs hat sich herausgestellt, dass das Schmelzbad des Pulvergemisches je nach Zusammensetzung unterschiedliche Helligkeitswerte aufweist. Dabei können die Werkstoffe beispielsweise Metalle, Metalllegierungen und/oder Keramiken umfassen. Erfindungsgemäß konnte ermittelt werden, dass ein sogenanntes Prozessleuchten des angestrahlten Pulvergemisches heller ist, je geringer der Keramikanteil in dem Pulvergemisch ist. Bei dem sogenannten Prozessleuchten kann es sich beispielsweise um abgestrahltes Licht aufgrund des Aufschmelzvorgangs und/oder Erhitzens des Pulvergemisches handeln.

Mittels des erfindungsgemäßen Verfahrens können Abweichungen des Pulvergemisches von einer Normzusammensetzung, welche beispielsweise durch Unregelmäßigkeiten in einer Mischanlage des Pulvergemisches und/oder durch Verunreinigungen, insbesondere online, ermittelt werden.

Die Berechnung beziehungsweise Ermittlung der Konzentration des wenigstens einen Werkstoffs kann dabei beispielsweise anhand von Tabellen erfolgen. Beispielsweise kann experimentell für ein Pulvergemisch aus einem Aluminiumoxidpulver wie Al₂O₃ und einer Nickelbasislegierung wie IN718 für verschiedene Konzentrationen jeweilige erwartete Helligkeitswerte experimentell bestimmt und als Helligkeitsreferenzwerte in der Auswerteeinrichtung gespeichert und/oder in Tabellenform hinterlegt werden. Diese erwarteten und/oder vorbestimmten Helligkeitswerte können aber auch in Abhängigkeit von jeweiligen Prozess- beziehungsweise Steuerungsparametern der Fertigungsvorrichtung experimentell ermittelt und wiederum als Helligkeitsreferenzwerte in der Auswerteeinrichtung gespeichert und/oder in Tabellenform hinterlegt sein. Jeweilige Zwischenwerte können durch eine geeignete Interpolation berechnet und hinterlegt werden. Die Helligkeitswerte können dabei insbesondere abhängig von der Leistung des Hochenergiestrahls und/oder dessen Fokussierung sein.

In weiterer vorteilhafter Ausgestaltung des erfindungsgemäßen Verfahrens ist es vorgesehen, dass eine lokale Konzentration des wenigstens einen Werkstoffs in dem Pulvergemisch anhand von Helligkeitswerten jeweiliger belichteter Pixel der Erfassungseinrichtung ermittelt wird. Ein belichteter Pixel kann dabei einem bestimmten Punkt beziehungsweise einem bestimmten begrenzten Teilbereich in der Oberfläche entsprechen. So kann die Konzentration wenigstens eines der Werkstoffe lokal entsprechend der Auflösung der Erfassungseinrichtung bestimmt werden. Dadurch ist es möglich, eine Konzentrationsverteilung der unterschiedlichen Werkstoffe in dem Pulvergemisch exakt zu bestimmen. Des Weiteren ist es wiederum möglich, Unregelmäßigkeiten bei Werkstoffkonzentrationen des Pulvergemischs auf einer Baufläche zu erfassen. Beispielsweise kann ein Pulvergemisch auch durch das abwechselnde Auftragen von zwei verschiedenen Pulvern bereitgestellt werden. Dabei kann es zu lokal ungleichmäßigen Konzentrationen kommen, welche durch das erfindungsgemäße Verfahren erfasst und bei der Herstellung des Bauteils berücksichtigt und/oder korrigiert werden können.

In weiterer vorteilhafter Ausgestaltung des erfindungsgemäßen Verfahrens ist es vorgesehen, dass der mindestens eine Helligkeitswert bei einer vorbestimmten Wellenlänge oder einem vorbestimmten Wellenlängenbereich erfasst wird. Damit können vorteilhafterweise mögliche Störgrößen bei der Erfassung der Helligkeitswerte herausgefiltert werden. Beispielsweise kann es bei dem Anstrahlen des Pulvergemisches mit dem Hochenergiestrahl zu einer Reflexion des Hochenergiestrahls kommen, welche bei der Ermittlung der Konzentration des wenigstens einen Werkstoffs nicht berücksichtigt werden sollte. Da die Wellenlänge des Hochenergiestrahls üblicherweise bekannt ist, können jeweilige Reflexionen des Hochenergiestrahls so einfach herausgerechnet und/oder gefiltert werden. Weiterhin können Wellenlängen und Wellenlängenbereiche ausgewählt werden, bei oder in denen relativ hohe Signale beziehungsweise Helligkeitswerte gemessen werden können. Dies dient der Erhöhung der Genauigkeit der Konzentrationsbestimmungen. Auch können die Helligkeitswerte mehrere Werkstoffe des Pulvergemisches bei jeweils unterschiedlichen Wellenlängen oder Wellenlängenbereichen erfasst werden. Erfindungsgemäß ist vorgesehen, dass mittels der Erfassungseinrichtung jeweilige Helligkeitswerte im sichtbaren und/oder infraroten Spektralbereich erfasst werden. Dafür können beispielsweise entsprechende Filter vor einem Sensor der Erfassungseinrichtung vorgesehen sein. Die Erfassung im sichtbaren Spektralbereich kann mittels eines besonders kostengünstigen Sensors erfolgen. Beispielsweise können dabei handelsübliche Sensoren einer CCD-Kamera eingesetzt werden. Bei der Erfassung im infraroten Spektralbereich können die jeweiligen Helligkeitswerte besonders gut ohne Störgrößen wie Reflexionen des Hochenergiestrahls erfasst werden. Bei dem infraroten Spektralbereich handelt es sich insbesondere um den nahen infraroten Spektralbereich. Durch die Anstrahlung mit dem Hochenergiestrahl und das lokale Aufschmelzen wird das Pulvergemisch üblicherweise primär zu dem Abstrahlen von infraroter Strahlung und weniger zu der Abstrahlung von Licht im sichtbaren Spektralbereich angeregt. Im Sinne dieser Anmeldung sind dabei infrarote Strahlungswerte ebenfalls als Helligkeitswerte zu verstehen. Entsprechendes gilt für die Referenzhelligkeitswerte. Das heißt, von der Oberfläche beziehungsweise dem Pulvergemisch emittierte infrarote Strahlung kann als Helligkeitswert der Oberfläche erfasst werden. Als Sensor für die Erfassung im infraroten Spektralbereich kann beispielsweise ein sogenannter CMOS-Sensor verwendet werden.

In weiterer vorteilhafter Ausgestaltung des erfindungsgemäßen Verfahrens ist es vorgesehen, dass eine gemittelte Konzentration des wenigstens einen Werkstoffs in dem Pulvergemisch über eine Mittelung wenigstens zweier Helligkeitswerte und dem Vergleich mit dem mindestens einen vorbestimmten Referenzhelligkeitswert für eine Konzentration und/oder einen Konzentrationsbereich des Werkstoffs ermittelt wird. Damit kann zuverlässig bestimmt werden, ob das bereitgestellte Pulvergemisch generell eine geforderte Zusammensetzung aufweist. Durch eine Mittelung können zudem auch jeweilige Störungen, welche keinen Einfluss auf die Bauteilqualität haben und/oder nicht einer abweichenden Konzentration entsprechen, bei der Ermittlung der Konzentration unberücksichtigt bleiben. Insbesondere kann dafür die gemittelte Konzentration nach statistischen Methoden bestimmt werden, bei denen jeweilige Extremwerte der Konzentration nicht berücksichtigt werden. Dabei können entsprechende Minimal- und Maximalwerte der Helligkeitswerte als Schwellwerte vorbestimmt werden.

In weiterer vorteilhafter Ausgestaltung des erfindungsgemäßen Verfahrens ist es vorgesehen, dass nach einem Weiterführen des Hochenergiestrahls aus dem angestrahlten Teilbereich der Oberfläche heraus weitere Helligkeitswerte dieses Teilbereichs über eine vorbestimmte Zeitdauer weiter mittels der Erfassungseinrichtung erfasst werden. Dabei beispielsweise eine Abkühlung beziehungsweise Abdunkelung des Teilbereichs der Oberfläche nach dem Anstrahlen und Aufschmelzen mit dem Hochenergiestrahl erfasst, wobei unterschiedliche Werkstoffverhältnisse in dem Pulvergemisch einen Einfluss auf das Abkühlverhalten und die entsprechende Lichtemission haben. Neben der Bestimmung der relativen Verhältnissen der Werkstoffkonzentrationen zueinander, die wiederum über den Vergleich der erfassten Helligkeitswerte und/oder Helligkeitsintervalle mit entsprechenden Referenzhelligkeitswerten und/oder vorbestimmten Referenzhelligkeitsintervallen bestimmt werden können, ist es auch möglich, Aussagen über die allgemeinen Stoffverhältnisse in dem Pulvergemisch treffen zu können. So kann beispielsweise ein Pulvergemisch mit einem höheren Anteil an Metallen Wärme schneller dissipieren als ein Pulvergemisch mit einem hohen Keramikanteil. Des Weiteren können auch Pulverzusammensetzungen anhand unterschiedlicher Abkühlkurven unterschieden werden, welche zunächst bei der Anstrahlung beziehungsweise Aufschmelzung ähnliche Helligkeitswerte aufweisen.

In weiterer vorteilhafter Ausgestaltung des erfindungsgemäßen Verfahrens ist es vorgesehen, dass jeweilige Helligkeitswerte und/oder Konzentrationen, insbesondere lokale Konzentrationen, in einer Datenbankvorrichtung abgespeichert werden. Dadurch ist eine Analyse des Herstellprozesses nach der Fertigstellung des Bauteils möglich. Gleichzeitig können die gesammelten Daten zur Bestimmung einer Bauteilqualität herangezogen werden. Ebenso können die gesammelten Daten zum Vergleich beim Herstellen weiterer Bauteile genutzt werden. Die gespeicherten Werte können insbesondere auch als weitere Referenzwerte für weitere Ermittlungen von Konzentrationen über entsprechende Helligkeitswerte bei anderen Pulvergemischen dienen.

In weiterer vorteilhafter Ausgestaltung des erfindungsgemäßen Verfahrens ist es vorgesehen, dass mittels der Auswerteeinrichtung mindestens eine Störstelle in der Oberfläche des Pulvergemisches anhand von für die Störstelle charakteristischen Helligkeitswerten ermittelt wird, wobei die der ermittelten Störstelle zugehörigen Helligkeitswerte bei der Berechnung der Konzentration des wenigstens einen Werkstoffs nicht berücksichtigt werden. Jeweilige Helligkeitswerte der angestrahlten beziehungsweise aufgeschmolzenen Bereiche der Oberfläche können sich nicht nur aufgrund der Konzentration der Werkstoffe im Pulvergemisch ändern, sondern auch aufgrund von anderen Faktoren. Es kann zu sogenannten Störstellen bei der Herstellung des Bauteils kommen. Beispielsweise können solche Störstellen durch einen falsch fokussierten und/oder mit abweichender Leistung bereitgestellten Hochenergiestrahl entstehen. Ebenso kann es zu Störstellen aufgrund von geometrischen Unregelmäßigkeiten in dem Pulver kommen. Beispielsweise kann es eine Lücke in dem Pulver geben oder eine lokale Erhebung. Weiterhin können Störstellen durch andere Umwelteinflüsse entstehen, beispielsweise durch eine Verwirbelung in einem Schutzgas oder eine ungleichmäßige Zusammensetzung des Schutzgases. Solche Störstellen haben üblicherweise einen Einfluss auf die jeweiligen Helligkeitswerte bei der Anstrahlung und Aufschmelzung der Oberfläche des Pulvers und sollten bei der Ermittlung der Konzentrationen der Werkstoffe nicht berücksichtigt werden. Durch ein Ermitteln und ein Herausfiltern von Störstellen kann daher die Konzentration besonders genau bestimmt werden und somit auch ein Bauteil mit besonders hoher Qualität hergestellt werden.

In weiterer vorteilhafter Ausgestaltung des erfindungsgemäßen Verfahrens ist es vorgesehen, dass zum Ermitteln von Störstellen eine Form und/oder eine Größe eines erfassten Helligkeitsbereichs mit einer vorbestimmten und/oder einer vorbestimmten Größe eines Referenzhelligkeitsbereichs und/oder eine Überschreitung eines vorbestimmten minimalen oder maximalen Helligkeitswertes des erfassten Helligkeitswertes und/oder eine Differenz jeweiliger Helligkeitswerte zwischen wenigstens zwei benachbarten Messstellen mit mindestens einem vorbestimmten Differenzschwellenwert, verglichen wird. Die Messstellen können insbesondere jeweiligen Pixeln der Erfassungseinrichtung entsprechen. Viele Störstellen können anhand ihrer Beschaffenheit beziehungsweise der oben genannten Kriterien sehr zuverlässig identifiziert werden. Beispielsweise lässt eine starke Helligkeitsänderung über eine kurze Distanz auf der Oberfläche des Pulvergemisches beziehungsweise in einem kleinen Bereich auf eine Störstelle schließen, welcher nicht einer Konzentrationsänderung der Werkstoffe entspricht. Die starke Helligkeitsänderung über eine kurze Distanz auf der Oberfläche kann auch als scharfkantige Helligkeitsänderung bezeichnet werden. Beispielsweise kann bei einem Pulvergemisch aus zwei unterschiedlichen Pulvern eine ungleichmäßige Konzentrationsverteilung beziehungsweise Verteilung der Werkstoffe aufgrund von fehlerhaften Mischprozessen erfolgen. Diese ist jedoch üblicherweise graduell über einen großflächigeren Bereich der Oberfläche des Pulvergemisches verteilt. Eine scharfkantige Helligkeitsänderung ist daher üblicherweise kein Ergebnis eines fehlerhaften Mischprozesses.

In weiterer vorteilhafter Ausgestaltung des erfindungsgemäßen Verfahrens ist es vorgesehen, dass die Konzentration des wenigstens einen Werkstoffs in dem Pulvergemisch als Ausgangsstoff für die additive Herstellung des Bauteils mittels des Verfahrens gemäß dem ersten Erfindungsaspekt ermittelt wird und ein Steuerungsparameter der Fertigungsvorrichtung mittels der Auswerteeinrichtung in Abhängigkeit von der ermittelten Konzentration des wenigstens einen Werkstoffs eingestellt wird.
So ist es möglich, die Fertigungsvorrichtung und das Herstellverfahren in Abhängigkeit der ermittelten Konzentrationen zu steuern beziehungsweise zu regeln. Insbesondere kann eine Strahlungsquelle, eine Ablenkvorrichtung, eine Pulververteilungsvorrichtung und/oder eine Pulvermischvorrichtung in Abhängigkeit von den ermittelten Konzentrationen gesteuert werden, um dem Auftrag beziehungsweise dem Verschmelzen einer Pulvermischung mit fehlerhaften Werkstoffkonzentrationen und -verhältnissen entgegenwirken zu können. Dadurch kann vorteilhafterweise die Bauteilqualität deutlich verbessert werden. Zudem kann auch ein aufgrund von den jeweiligen Konzentrationen der Werkstoffe abhängiger Schrumpf in den einzelne Bauteilschichten und/oder in bestimmten Teilbereichen der Bauteilschichten bei der Herstellung des Bauteils berücksichtigt werden. Ebenso kann die ermittelte Konzentration der Werkstoffe in einer Schicht bei dem Aufbau der nächsten Schicht des Bauteils für die Steuerung der Fertigungsvorrichtung berücksichtigt werden.
Ein zweiter Aspekt der Erfindung betrifft eine Fertigungsvorrichtung zur additiven Herstellung eines Bauteils, insbesondere eines Bauteils einer Strömungsmaschine, mit wenigstens einer Pulververteilungsvorrichtung zum Bereitstellen eines Pulvergemisches, das a) wenigstens ein Metallpulver und/oder Metallegierungspulver sowie b) wenigstens einen keramischen, pulverförmigen Werkstoff als Ausgangsstoff für das additive Herstellen des Bauteils aufweist, und mit wenigstens einer Strahlungsquelle, mittels welcher ein über eine Oberfläche des Pulvergemischs führbarer Hochenergiestrahl zum Sintern oder Schmelzen des Pulvergemischs erzeugbar ist. Erfindungsgemäß ist es dabei vorgesehen, dass die Fertigungsvorrichtung wenigstens eine Erfassungseinrichtung zum Erfassen mindestens eines Helligkeitswerts der Oberfläche des Pulvergemisches im sichtbaren und/oder infraroten Spektralbereich bei deren Anstrahlung mit dem Hochenergiestrahl und wenigstens eine Auswerteeinrichtung, mittels welcher eine Konzentration wenigstens eines Werkstoffs in dem Pulvergemisch in Abhängigkeit von dem mindestens einen erfassten Helligkeitswert und von mindestens einem Referenzhelligkeitswert für eine Konzentration und/oder Konzentrationsbereich des Werkstoffs berechenbar ist, umfasst.
Die Fertigungsvorrichtung ist also dazu ausgebildet, ein Verfahren gemäß dem ersten Erfindungsaspekt durchzuführen. Dadurch können jeweilige Bauteile, insbesondere Bauteile einer Strömungsmaschine, mit einer besonders hohen Qualität hergestellt werden.

Ein Bauteil kann mit einem Verfahren gemäß dem ersten Erfindungsaspekt und/oder in einer Fertigungsvorrichtung gemäß dem zweiten Erfindungsaspekt hergestellt werden. Dadurch kann ein Bauteil mit einer besonders hohen Qualität hergestellt werden. Als Qualitätsmerkmale sind hier beispielsweise eine Einhaltung einer Geometrie des Bauteils, jeweilige Festigkeiten, eine Dichte des Bauteils und/oder eine Werkstoffhomogenität und/oder die Oberflächengüte des Bauteils anzusehen.

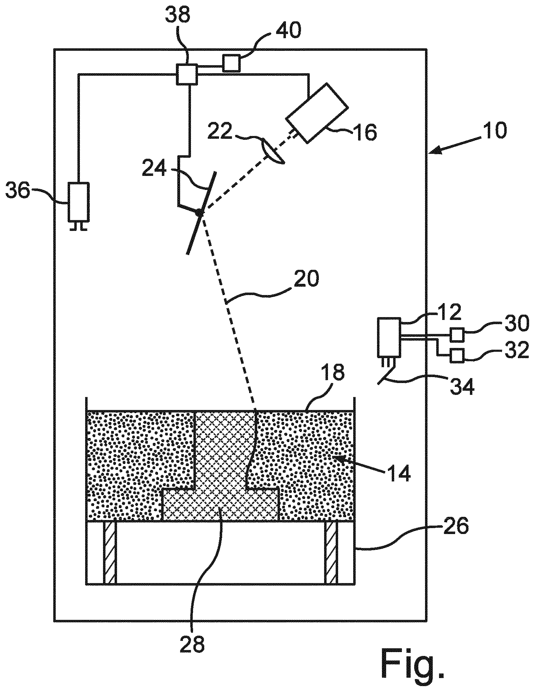

Dabei zeigt die einzige Figur in einer schematischen Schnittansicht eine Fertigungsvorrichtung zur additiven Herstellung eines Bauteils.
Die Figur zeigt in einer schematischen Schnittansicht eine Fertigungsvorrichtung 10 zur additiven Herstellung eines Bauteils 28, insbesondere eines Bauteils einer Strömungsmaschine. Die Fertigungsvorrichtung 10 umfasst dabei wenigstens eine Pulververteilungsvorrichtung 12 zum Auftrag eines Pulvergemisches 14 auf eine höhenverstellbare Bauplattform 26. Das Pulvergemisch 14 umfasst dabei wenigstens zwei unterschiedliche Werkstoffe als Ausgangsstoff für das additive Herstellen des Bauteils 28. Weiterhin umfasst die Fertigungsvorrichtung 10 eine Strahlungsquelle 16, mittels welcher ein über eine Oberfläche 18 des Pulvergemisches 14 führbarer Hochenergiestrahl 20 erzeugbar ist. Der Hochenergiestrahl 20 wird dabei mittels einer Fokussiereinrichtung 22 fokussiert und mittels einer Ablenkvorrichtung 24 über die Oberfläche 18 des Pulvergemisches 14 geführt. Alternativ könnte auch beispielsweise die Strahlungsquelle 16 selbst zum Führen des Hochenergiestrahls 20 bewegt werden. Durch das Führen des Hochenergiestrahls 20 über die Oberfläche 18 des Pulvergemisches 14 wird das Bauteil 28 schichtweise durch ein Verschmelzen und/oder Versintern des Pulvergemisches 14 hergestellt. In der Figur ist als Bauteil 28 eine bereits teilweise hergestellte Leitschaufel einer Strömungsmaschine schematisch dargestellt.

Der Hochenergiestrahl 20 ist im dargestellten Ausführungsbeispiel ein Laserstrahl. Es können aber beispielsweise auch Elektronenstrahlen verwendet werden. Mittels der Fertigungsvorrichtung 10 kann das Bauteil 28 beispielsweise in dem sogenannten selektiven Laserschmelzverfahren hergestellt werden.

Das Pulvergemisch 14 umfasst in dem dargestellten Ausführungsbeispiel zwei unterschiedliche pulverförmige Werkstoffe, welche in zwei Depots 30 und 32 gelagert sind. Aus den Depots 30, 32 werden der Pulververteilungsvorrichtung 12 die Werkstoffe zugeführt und dort gemischt. Beispielsweise kann im Depot 30 ein metallischer Werkstoff wie eine Nickelbasislegierung gelagert sein und im Depot 32 ein Keramikwerkstoff oder ein keramischer Ausgangsstoff gelagert sein. Die Pulververteilungsvorrichtung 12 umfasst zudem einen Rakel 34 zum Auftrag des Pulvergemisches auf die Bauplattform 26. Alternativ kann das Pulvergemisch 14 auch bereits fertig gemischt der Pulververteilungsvorrichtung 12 zugeführt werden. Selbstverständlich kann das Pulvergemisch 14 auch aus drei oder mehr unterschiedlichen Werkstoffen gebildet sein.

In beiden Fällen kann es bei einer Mischung der Werkstoffe des Pulvergemischs 14 zu Unregelmäßigkeiten kommen. Beispielsweise können die beiden separaten Pulver beziehungsweise die beiden Werkstoffe nicht überall gleichmäßig vermischt sein. Dadurch können lokal in ungewollter Weise unterschiedliche Konzentrationen der Werkstoffe in dem Pulvergemisch 14 vorliegen. Diese Abweichungen von gewünschten gleichmäßigen Konzentrationsverteilungen haben einen Einfluss auf die Qualität des fertigen Bauteils 28. Insbesondere kann das Pulvergemisch 14 bei unterschiedlichen Konzentrationen der einzelnen Werkstoffe unterschiedlich auf die Anstrahlung mit dem Hochenergiestrahl 20 reagieren. Beispielsweise kann das Pulvergemisch 14 bei einer von einer vordefinierten und vorteilhaften Konzentrationsverteilung abweichenden Konzentration der Werkstoffe zu stark oder zu wenig aufschmelzen. Dadurch kann das fertig hergestellte Bauteil lokale Inhomogenitäten aufweisen, insbesondere Dichteschwankungen, lokal unterschiedliche Festigkeiten und/oder einen unplanmäßigen und/oder unregelmäßigen Schrumpf. Es kommt zu einer erhöhten Ausschussrate, da das hergestellte Bauteil eine verminderte Bauteilqualität aufweist. Hierdurch können auch teure und aufwendige Nachbearbeitungen notwendig werden.

Die in der Figur gezeigten Fertigungsvorrichtung 10 umfasst zudem eine Erfassungseinrichtung 36 zum Erfassen mindestens eines Helligkeitswerts im sichtbaren und/oder infraroten Spektralbereich der Oberfläche 18 des gesinterten oder geschmolzenen Pulvergemisches bei deren Anstrahlung mit dem Hochenergiestrahl 20 sowie eine Auswerteeinrichtung 38, mittels welcher eine Konzentration oder ein Konzentrationsbereich wenigstens eines der Werkstoffe in dem Pulvergemisch 14 in Abhängigkeit von den erfassten jeweiligen Helligkeitswerten und von mindestens einem Referenzhelligkeitswert für eine Konzentration und/oder einen Konzentrationsbereich des Werkstoffs berechenbar ist. In Abhängigkeit von dieser ermittelten Konzentration des wenigstens einen Werkstoffs oder der Konzentrationen einiger oder aller Werkstoffe kann die Fertigungsvorrichtung 10 gesteuert werden. Beispielsweise kann die Auswerteeinrichtung 38 eine Leistung der Strahlungsquelle 16 und/oder eine Ansteuerung der Ablenkvorrichtung 24 in Abhängigkeit von den erfassten Konzentrationen steuern. Dadurch können beispielsweise jeweilige Unregelmäßigkeiten bei der Mischung des Pulvergemisches 14 zumindest teilweise bei der additiven Fertigung kompensiert werden. Die Konzentration der Werkstoffe im Pulvergemisch 14 kann also bei der Fertigungsvorrichtung 10 über eine sogenannte Online-Prozesskontrolle überwacht und/oder geregelt werden.

Dabei wird sich zunutze gemacht, dass sich eine Änderung der Pulverzusammensetzung beziehungsweise der Werkstoffkonzentrationen im Pulvergemisch 14 deutlich auf ein Prozessleuchten auswirkt. Als Prozessleuchten wird das erzeugte Licht beziehungsweise die erzeugte Strahlung aufgrund eines Anstrahlens, des Erwärmens und des erfolgenden Aufschmelzens des Pulvergemisches 14 mit dem Hochenergiestrahl 20 bezeichnet. So wird beim Erwärmen und/oder beim Aufschmelzen des Pulvergemisches 14 eine thermische Strahlung emittiert. Gleichzeitig kann es auch zu Verdampfung und/oder Ionisierung von Teilen des Pulvergemisches 14 kommen. Ebenso kann das Pulvergemisch 14 den Hochenergiestrahl 20 wenigstens teilweise reflektieren.

Die erfassten Helligkeitswerte können dabei als Grauwerte gelesen werden. Beispielsweise kann bei einem 10-prozentigen Anteil von Aluminiumoxid in dem Pulvergemisch 14 ein Grauwert von 15000 gemessen werden, bei einem 20-prozentigen Anteil von Aluminiumoxid in dem Pulvergemisch 14 ergibt sich ein Grauwert von 20000. Eine Ermittlung der Konzentration dieses Werkstoffs innerhalb des Pulvergemisches 14 ist somit sehr genau möglich. Zwischenwerte können durch Interpolation ermittelt werden.

Die Erfassungseinrichtung 36 kann beispielsweise als sogenannter optischer Tomograf ausgebildet sein. Dieser optische Tomograf kann beispielsweise Licht im sichtbaren und/oder im nahen infraroten Spektralbereich erfassen. Insbesondere durch geeignete Filter kann dabei die Erfassung jeweiliger Helligkeitswerte, welche mit der Konzentration der Werkstoffe korrelieren, eingegrenzt werden. Beispielsweise sollten jeweilige Reflexionen des Hochenergiestrahls 20 bei der Erfassung herausgefiltert werden. Die dargestellte Fertigungsvorrichtung 10 umfasst zudem eine Datenbankvorrichtung oder Speichervorrichtung 40, in der jeweilige Messwerte für eine spätere Auswertung und/oder zu einem weiteren Vergleich abgespeichert werden können. Gleichzeitig können in der Datenbankvorrichtung 40 jeweilige Referenzhelligkeitswerte gespeichert sein. Beispielsweise kann die Konzentration eines Werkstoffs in dem Pulvergemisch 14 mittels eines Vergleichs der gemessenen Helligkeitswerte mit Helligkeitsreferenzwerten in einer Tabelle und/oder aus bei vorherigen Fertigungen gespeicherten Werten verglichen werden. Diese Helligkeitsreferenzwerte können beispielsweise für jeweilige unterschiedliche Konzentrationen von unterschiedlichen Werkstoffen und/oder unterschiedliche Leistungen und Ablenkgeschwindigkeiten des Hochenergiestrahls 20 hinterlegt werden.

Bei der Verarbeitung von sogenanntem Multimaterialpulver ist eine Einhaltung einer definierten Zusammensetzung, das heißt eine definierte und vorbestimmte Konzentration der einzelnen Komponenten, von entscheidender Bedeutung für die gewünschten Eigenschaften des Pulvergemisches 14 und die Qualität des daraus hergestellten Bauteils 28. Die Konzentrationen müssen sowohl in Aufbaurichtung sowie in der Bauebene den eingestellten Vorgaben entsprechen. Über eine geeignete Prozesskontrolle können diese Konzentrationen überwacht und/oder sogar geregelt werden. Das heißt, auch die Pulververteilungsvorrichtung 12 kann in Abhängigkeit von den ermittelten Konzentrationen gesteuert werden. Dabei kann bei dem Auftragen einer neuen Pulverschicht die Zusammensetzung des Pulvergemisches 14 neu eingestellt werden, um zum Beispiel Abweichungen in der vorherigen Bauteilschicht kompensieren zu können. Als Überwachungsverfahren kann dabei die optische Tomografie eingesetzt werden.

### Bezugszeichenliste

- 10: Fertigungsvorrichtung
- 12: Pulververteilungsvorrichtung
- 14: Pulvergemisch
- 16: Strahlungsquelle
- 18: Oberfläche
- 20: Hochenergiestrahl
- 22: Fokussiereinrichtung
- 24: Ablenkvorrichtung
- 26: Bauplattform
- 28: Bauteil
- 30: Depot
- 32: Depot
- 34: Rakel
- 36: Erfassungseinrichtung
- 38: Auswerteinrichtung
- 40: Datenbankvorrichtung

## Patentansprüche

1. Verfahren zum Ermitteln einer Konzentration wenigstens eines Werkstoffs in einem gesinterten oder geschmolzenen Pulvergemisch (14), das a) wenigstens ein Metallpulver und/oder Metalllegierungspulver sowie b) wenigstens einen keramischen, pulverförmigen Werkstoff aufweist, und welches als Ausgangsstoff für die Herstellung eines Bauteils (28) in einem additiven Herstellverfahren mittels einer Fertigungsvorrichtung (10) dient, umfassend zumindest die Schritte:
- Bereitstellen des Pulvergemisches (14) mit den wenigstens zwei unterschiedlichen Werkstoffen;
- Führen eines mittels einer Strahlungsquelle (16) erzeugten Hochenergiestrahls (20) über eine Oberfläche (18) des Pulvergemisches (14) zum Sintern oder Schmelzen des Pulvergemisches;
- Erfassen mindestens eines Helligkeitswerts im sichtbaren und/oder infraroten Spektralbereich wenigstens eines mittels des Hochenergiestrahls (20) angestrahlten Teilbereichs der Oberfläche (18) des gesinterten oder geschmolzenen Pulvergemisches während der Anstrahlung mit dem Hochenergiestrahl (20) mittels einer Erfassungseinrichtung (36);
- Ermitteln der Konzentration wenigstens eines Werkstoffs in dem Pulvergemisch (14) in Abhängigkeit von dem erfassten mindestens einen Helligkeitswert und von mindestens einem vorbestimmten Referenzhelligkeitswert für eine Konzentration und/oder einen Konzentrationsbereich des Werkstoffs mittels einer Auswerteeinrichtung (38).

2. Verfahren nach Anspruch 1,
**dadurch gekennzeichnet, dass**
eine lokale Konzentration des wenigstens einen Werkstoffs in dem Pulvergemisch (14) anhand von Helligkeitswerten jeweiliger belichteter Pixel der Erfassungseinrichtung (36) ermittelt wird.

3. Verfahren nach einem der Ansprüche 1 oder 2,
**dadurch gekennzeichnet, dass**
der mindestens eine Helligkeitswert bei einer vorbestimmten Wellenlänge oder einem vorbestimmten Wellenlängenbereich erfasst wird.

4. Verfahren nach einem der vorhergehenden Ansprüche,
**dadurch gekennzeichnet, dass**
eine gemittelte Konzentration des wenigstens einen Werkstoffs in dem Pulvergemisch (14) über eine Mittelung wenigstens zweier Helligkeitswerte und dem Vergleich mit dem mindestens einen vorbestimmten Referenzhelligkeitswert für eine Konzentration und/oder einen Konzentrationsbereich des Werkstoffs ermittelt wird.

5. Verfahren nach einem der vorhergehenden Ansprüche,
**dadurch gekennzeichnet, dass**
nach einem Weiterführen des Hochenergiestrahls aus dem angestrahlten Teilbereich der Oberfläche (18) heraus weitere Helligkeitswerte dieses Teilbereichs über eine vorbestimmte Zeitdauer weiter mittels der Erfassungseinrichtung (36) erfasst werden und dabei eine Abkühlung oder Abdunkelung des Teilbereichs der Oberfläche erfasst wird.

6. Verfahren nach einem der vorhergehenden Ansprüche,
**dadurch gekennzeichnet, dass**
jeweilige Helligkeitswerte und/oder Konzentrationen in einer Datenbankvorrichtung (40) abgespeichert werden.

7. Verfahren nach einem der vorhergehenden Ansprüche,
**dadurch gekennzeichnet, dass**
mittels der Auswerteeinrichtung (38) mindestens eine Störstelle in der Oberfläche (18) des Pulvergemisches (14) anhand von für die Störstelle charakteristischen Helligkeitswerten ermittelt wird, wobei die der ermittelten Störstelle zugehörigen Helligkeitswerte bei der Berechnung der Konzentration des wenigstens einen Werkstoffs nicht berücksichtigt werden.

8. Verfahren nach Anspruch 7,
**dadurch gekennzeichnet, dass**
zum Ermitteln von Störstellen eine Form und/oder eine Größe eines erfassten Helligkeitsbereichs mit einer vorbestimmten und/oder einer vorbestimmten Größe eines Referenzhelligkeitsbereichs und/oder eine Überschreitung eines vorbestimmten minimalen oder maximalen Helligkeitswertes des erfassten Helligkeitswertes und/oder eine Differenz jeweiliger Helligkeitswerte zwischen wenigstens zwei benachbarten Messstellen mit mindestens einem vorbestimmten Differenzschwellwert, verglichen wird.

9. Verfahren nach einem der vorhergehenden Ansprüche,
**dadurch gekennzeichnet, dass**
weiter ein Steuerungsparameter der Fertigungsvorrichtung (10) mittels der Auswerteeinrichtung (38) und/oder einer Steuer- oder Regelungsvorrichtung in Abhängigkeit von der ermittelten Konzentration des wenigstens einen Werkstoffs eingestellt wird.

10. Fertigungsvorrichtung (10) zur additiven Herstellung eines Bauteils (28) mit wenigstens einer Pulververteilungsvorrichtung (12) zum Bereitstellen eines Pulvergemisches (14) umfassend wenigstens zwei unterschiedliche Werkstoffe als Ausgangsstoff für das additive Herstellen des Bauteils (28), wobei das Pulvergemisch (14) a) wenigstens ein Metallpulver und/oder Metalllegierungspulver sowie b) wenigstens einen keramischen, pulverförmigen Werkstoff aufweist, mit wenigstens einer Strahlungsquelle (16), mittels welcher ein über eine Oberfläche (18) des Pulvergemisches (14) führbarer Hochenergiestrahl (20) zum Sintern oder Schmelzen des Pulvergemisches (14) erzeugbar ist, und wenigstens einer Erfassungseinrichtung (36) zum Erfassen mindestens eines Helligkeitswerts im sichtbaren und/oder infraroten Spektralbereich der gesinterten oder geschmolzenen Oberfläche (18) bei deren Anstrahlung mit dem Hochenergiestrahl (20),
**dadurch gekennzeichnet, dass**
die Fertigungsvorrichtung (10) wenigstens eine Auswerteeinrichtung (38) umfasst, mittels welcher eine Konzentration wenigstens eines Werkstoffs in dem gesinterten oder geschmolzenen Pulvergemisch (14) in Abhängigkeit von dem mindestens einen erfassten Helligkeitswert und von mindestens einem Referenzhelligkeitswert für eine Konzentration und/oder Konzentrationsbereich des Werkstoffs berechenbar ist.

## Claims

1. Method for determining a concentration of at least one material in a sintered or melted powder mixture (14) which comprises a) at least one metal powder and/or metal alloy powder and b) at least one ceramic, pulverized material, and which is used as a starting material for producing a component (28) in an additive manufacturing method using a manufacturing device (10), comprising at least the steps of:
- providing the powder mixture (14) having the at least two different materials;
- guiding a high-energy beam (20) generated by a radiation source (16) over a surface (18) of the powder mixture (14) in order to sinter or melt the powder mixture;
- detecting at least one brightness value, in the visible and/or infrared spectral range, of at least one portion of the surface (18) of the sintered or melted powder mixture, which portion is irradiated by means of the high-energy beam (20), by means of a detection apparatus (36) during irradiation by the high-energy beam (20);
- determining the concentration of at least one material in the powder mixture (14) on the basis of the at least one detected brightness value and at least one predetermined reference brightness value for a concentration and/or a concentration range of the material by means of an analysis apparatus (38).

2. Method according to claim 1, **characterized in that** a local concentration of the at least one material in the powder mixture (14) is determined on the basis of brightness values of corresponding illuminated pixels of the detection apparatus (36).

3. Method according to either claim 1 or claim 2, **characterized in that** the at least one brightness value is detected at a predetermined wavelength or in a predetermined wavelength range.

4. Method according to any of the preceding claims, **characterized in that** an averaged concentration of the at least one material in the powder mixture (14) is determined by averaging at least two brightness values and comparing with the at least one predetermined reference brightness value for a concentration and/or a concentration range of the material.

5. Method according to any of the preceding claims, **characterized in that**, after the high-energy beam has been guided out of the irradiated portion of the surface (18), further brightness values of said portion are also detected over a predetermined time period by means of the detection apparatus (36), and a cooling or dimming of the portion of the surface is thus detected.

6. Method according to any of the preceding claims, **characterized in that** particular brightness values and/or concentrations are stored in a database device (40).

7. Method according to any of the preceding claims, **characterized in that** at least one imperfection in the surface (18) of the powder mixture (14) is determined by means of the analysis apparatus (38) on the basis of brightness values that are characteristic of the imperfection, the brightness values associated with the determined imperfection not being taken into account for calculating the concentration of the at least one material.

8. Method according to claim 7, **characterized in that** in order to determine imperfections, a shape and/or a size of a detected brightness range is compared with a predetermined and/or a predetermined size of a reference brightness range, and/or a detected brightness value above a predetermined minimum or maximum brightness value and/or a difference of respective brightness values between at least two adjacent measurement points is compared with at least one predetermined difference threshold value.

9. Method according to any of the preceding claims, **characterized in that** a control parameter of the manufacturing device (10) is also set by means of the analysis apparatus (38) and/or by means of an open-loop or closed-loop control device on the basis of the determined concentration of the at least one material.

10. Manufacturing device (10) for the additive manufacture of a component (28), having at least one powder distribution device (12) for providing a powder mixture (14) that comprises at least two different materials as a starting material for the additive manufacture of the component (28), the powder mixture (14) comprising a) at least one metal powder and/or metal alloy powder and b) at least one ceramic, pulverized material, said device having at least one radiation source (16) by means of which a high-energy beam (20) that can be guided over a surface (18) of the powder mixture (14) in order to sinter or melt the powder mixture (14) can be generated, and at least one detection apparatus (36) for detecting at least one brightness value, in the visible and/or infrared spectral range, of the sintered or melted surface (18) during the irradiation thereof by the high-energy beam (20), **characterized in that** the manufacturing device (10) comprises at least one analysis apparatus (38) by means of which a concentration of at least one material in the sintered or melted powder mixture (14) can be calculated on the basis of the at least one detected brightness value and at least one reference brightness value for a concentration and/or concentration range of the material.

## Revendications

1. Procédé de détermination d'une concentration d'au moins un matériau dans un mélange de poudres frittées ou fondues (14), qui comporte a) au moins une poudre de métal et/ou une poudre d'alliage métallique ainsi que b) au moins un matériau céramique pulvérulent, et qui sert de matière de base pour la fabrication d'un composant (28) dans un procédé de fabrication additive au moyen d'un dispositif de fabrication (10), comprenant au moins les étapes consistant à :
- fournir le mélange de poudres (14) comportant les au moins deux matériaux différents ;
- guider un faisceau à haute énergie (20) généré au moyen d'une source de rayonnement (16) au-dessus d'une surface (18) du mélange de poudres (14) pour le frittage ou la fusion du mélange de poudres ;
- détecter, au moyen d'un dispositif de détection (36), pendant l'illumination avec le faisceau à haute énergie (20), au moins une valeur de luminosité dans le domaine spectral visible et/ou infrarouge d'au moins une partie de la surface (18) du mélange de poudres frittées ou fondues, illuminée par le faisceau à haute énergie (20) ;
- déterminer, au moyen d'un dispositif d'évaluation (38), la concentration d'au moins un matériau dans le mélange de poudres (14) en fonction de l'au moins une valeur de luminosité détectée et d'au moins une valeur de luminosité de référence prédéterminée pour une concentration et/ou une plage de concentrations du matériau.

2. Procédé selon la revendication 1, **caractérisé en ce qu'**une concentration locale de l'au moins un matériau dans le mélange de poudres (14) est déterminée sur la base des valeurs de luminosité de pixels éclairés respectifs du dispositif de détection (36).

3. Procédé selon l'une des revendications 1 ou 2, **caractérisé en ce que** l'au moins une valeur de luminosité est détectée à une longueur d'onde prédéterminée ou dans une plage de longueurs d'onde prédéterminée.

4. Procédé selon l'une des revendications précédentes, **caractérisé en ce qu'**une concentration moyenne de l'au moins un matériau dans le mélange de poudres (14) est déterminée en faisant la moyenne d'au moins deux valeurs de luminosité et en la comparant à l'au moins une valeur de luminosité de référence prédéterminée pour une concentration et/ou une plage de concentrations du matériau.

5. Procédé selon l'une des revendications précédentes, **caractérisé en ce que**, après la sortie du faisceau à haute énergie de la partie illuminée de la surface (18), d'autres valeurs de luminosité de cette partie sont en outre détectées au moyen du dispositif de détection (36) pendant une période de temps prédéterminée, permettant ainsi de refroidir ou d'assombrir ladite partie de la surface.

6. Procédé selon l'une des revendications précédentes, **caractérisé en ce que** des valeurs de luminosité et/ou des concentrations respectives sont enregistrées dans un dispositif de base de données (40).

7. Procédé selon l'une des revendications précédentes, **caractérisé en ce que**, au moyen du dispositif d'évaluation (38), au moins une impureté dans la surface (18) du mélange de poudres (14) est déterminée sur la base de valeurs de luminosité caractéristiques de l'impureté, les valeurs de luminosité associées à l'impureté détectée n'étant pas prises en compte dans le calcul de la concentration de l'au moins un matériau.

8. Procédé selon la revendication 7, **caractérisé en ce que**, pour déterminer les impuretés, une forme et/ou une taille d'une plage de luminosité détectée sont comparées à une forme prédéterminée et/ou une taille prédéterminée d'une plage de luminosité de référence, et/ou un dépassement d'une valeur de luminosité minimale ou maximale prédéterminée de la valeur de luminosité détectée et/ou une différence de valeurs de luminosité respectives entre au moins deux points de mesure adjacents sont comparés à au moins une valeur de seuil de différence prédéterminée.

9. Procédé selon l'une des revendications précédentes, **caractérisé en ce qu'**on règle en outre un paramètre de commande du dispositif de fabrication (10) au moyen du dispositif d'évaluation (38) et/ou un dispositif de commande ou de régulation en fonction de la concentration déterminée de l'au moins un matériau.

10. Dispositif de production (10) pour la fabrication additive d'un composant (28) comprenant au moins un dispositif de distribution de poudre (12) pour fournir un mélange de poudres (14) comprenant au moins deux matériaux différents en tant que matière de base pour la fabrication additive du composant (28), le mélange de poudres comportant (14) a) au moins une poudre de métal et/ou une poudre d'alliage métallique ainsi que b) au moins un matériau céramique pulvérulent, comprenant au moins une source de rayonnement (16), au moyen de laquelle un faisceau à haute énergie (20) pouvant être guidé au-dessus d'une surface (18) du mélange de poudres (14) pour fritter ou fondre le mélange de poudres (14) peut être généré, et au moins un dispositif de détection (36) pour détecter au moins une valeur de luminosité dans la plage spectrale visible et/ou infrarouge de la surface frittée ou fondue (18) lorsqu'elle est illuminée avec le faisceau à haute énergie (20), **caractérisé en ce que** le dispositif de fabrication (10) comprend au moins un dispositif d'évaluation (38) au moyen duquel une concentration d'au moins un matériau dans le mélange de poudres frittées ou fondues (14) peut être calculée en fonction de l'au moins une valeur de luminosité détectée et d'au moins une valeur de luminosité de référence pour une concentration et/ou une plage de concentrations du matériau.
